# EUROPEAN PATENT SPECIFICATION

(11) **EP 2 209 561 B1**
(45) Date of publication and mention of the grant of the patent: **13.07.2011**
(21) Application number: 07866759.9
(22) Date of filing: 12.11.2007
(51) Int. Cl.: B05C 17/005

(54) **DISPENSER DEVICE FOR BI-COMPONENT SUBSTANCES**
ABGABEVORRICHTUNG FÜR ZWEIKOMPONENTENSTOFFE
DISPOSITIF DE DISTRIBUTEUR POUR SUBSTANCES À DEUX COMPOSANTS

(43) Date of publication of application: 28.07.2010
(73) Proprietor: ZHERMACK S.p.A., I-45021 Badia Polesine (Prov. Rovigo) (IT)
(72) Inventor: BUSIN, Tiziano, I-45021 Badia Polesine (IT)
(74) Representative: Vittorangeli, Lucia
(86) International application number: PCT/IT2007/000796
(87) International publication number: WO 2009/063509

(56) References cited:
- EP-A- 1 279 379
- EP-A- 1 439 009
- EP-A- 1 531 011
- EP-A- 1 700 639
- DE-A1- 2 733 310
- DE-A1- 10 146 093
- DE-U1- 8 435 167
- US-A- 5 390 825
- US-A- 5 944 601
- US-A1- 2006 188 314
- US-A1- 2006 283 891

## Description

The present invention relates to a dispenser device for bi-component substances. In particular, the present invention applies to odontology, for preparing and dispensing materials for dental impressions, silicones or others, formed with two distinct components.

In more detail, these substances are made up of a cross-linkable material and a cross-linking agent that must remain separated before use. Mixing of the two components gives rise to cross-linking of the mixed material within a predetermined period of time. The components therefore must be mixed together just before use.

The dispenser devices for bi-component substances of known type comprise a supporting body in which a receiving seat for a cartridge containing the two components of the substance to be mixed is formed.

These dispenser devices also comprise means designed to cause discharge of she components from the cartridge into a mixer the task of which is to mix the two components so as to generate a homogeneous composition. This means generally consists of a piston acting on a moving wall of the cartridge in order to reduce volume of same and cause dispensing of the substance.

Mixers are of the disposable type and can be static or dynamic. Static mixers comprise a dispensing nozzle and a fixed mixing element which is suitably shaped so as to promote mixing of the components. Dynamic mixers on the contrary comprise a propeller contained in the dispensing nozzle and set in rotation by a respective motor. Document DE-U-84 35 167 shows the features of the preamble of claims 1 and 10.

It is to be noted that the dispenser devices for bi-component substances are such conceived as to hold only one pair of components each time, to dispense the desired material for dental impressions, for example. However, frequently two different mixed bi-component substances are to be used during a single dental treatment session.

For instance, for obtaining a dental impression it is sometimes necessary to use a high viscosity material (termed tray material) together with a low viscosity material (termed lowering material).

In this case, the operator must be able to replace one cartridge with another in a very quick manner and in any case before the cross-linking reaction of the first-dispensed substance may occur.

Since this operation is very uncomfortable and delicate, in dentists' surgeries there is often the presence of two or more identical dispenser devices each designed to a different bi-component substance.

Disadvantageously, availability of a plurality of distinct dispenser devices involves great bulkiness. In addition, use of distinct dispenser devices is expensive and unpractical.

Within this context, the technical task of the present invention is to propose a dispenser device for bi-component substances that is without the mentioned drawbacks.

In particular, the present invention aims at proposing a dispenser device for bi-component substances having reduced bulkiness and increased compactness.

In addition, the invention aims at proposing a dispenser device that can be easily transported and controlled in a simple manner.

It is a further aim of the invention to propose a dispenser device for bi-component substances with an improved aesthetic appearance and adapted to be personalised.

In accordance with the present invention, the technical task and the aims herein described are achieved by a dispenser device for bi-component substances comprising the technical features set out in one or more of the appended claims.

Further features and advantages of the present invention will become more apparent from the detailed description of a preferred but not exclusive embodiment of a dispenser device for bi-component substances given by way of non-limiting example, as illustrated in the accompanying drawings in which:
- Figs. 1a and 1b show respective perspective views of a first embodiment of a dispenser device for bi-component substances according to the present invention;
- Fig. 2 is a section view.of a detail of the dispenser device seen in Figs. 1a and 1b;
- Figs. 3a and 3b show respective perspective views of a second embodiment of the dispenser device for bi-component substances according to the present invention;

- Fig. 4 shows a perspective view of a detail of the dispenser device seen in Figs. 3a and 3b;
- Fig. 5 shows a section view of the dispenser device according to the present invention;
- Fig. 6 is a perspective view of a set of dispenser devices for bi-component substances according to the present invention.

With reference to the drawings, a dispenser device for bi-component substances in accordance with the present invention has been generally identified with reference numeral 1.

The dispenser device 1 .comprises a supporting structure 2 having a base 3 and a holding body 4 fastened to the base and disposed with its major extension axis inclined to a horizontal reference.

Formed in the supporting structure 2 is a receiving seat 5 to house at least two cartridges 6 containing respective components of said substance and a mixer 7 adapted to homogeneously mix and amalgamate the two components. Cartridges 6 can be separated and distinct or, alternatively, can be of one piece construction with a single supporting structure.

In detail, a first portion 5a of the receiving seat 5 is formed in the holding body 4 to receive cartridges 6 and a second portion 5b of the receiving seat 5 is formed in a lower wall 8 of the supporting structure 2 to receive mixer 7.

The dispenser device 1 comprises a door or hatch 9 disposed in an upper surface 2a of the supporting structure 2. This hatch 9 allows access to the first portion 5a of the receiving seat 5 for introducing or removing cartridges 6.

Cartridges 6 are in fluid communication with mixer 7 to enable the components to be transferred thereinto. In detail, formed in the lower wall 8 of the supporting structure 2 are ducts 10a, 10b enabling passage of each component from the respective cartridge 6 to mixer 7.

Cartridges 6 further have a respective movable piston 11 disposed in the vicinity of the respective end 6a of each distal cartridge 6 relative to mixer 7. Pistons 11 are movable close to mixer 7 to force the components into the mixer 7 itself.

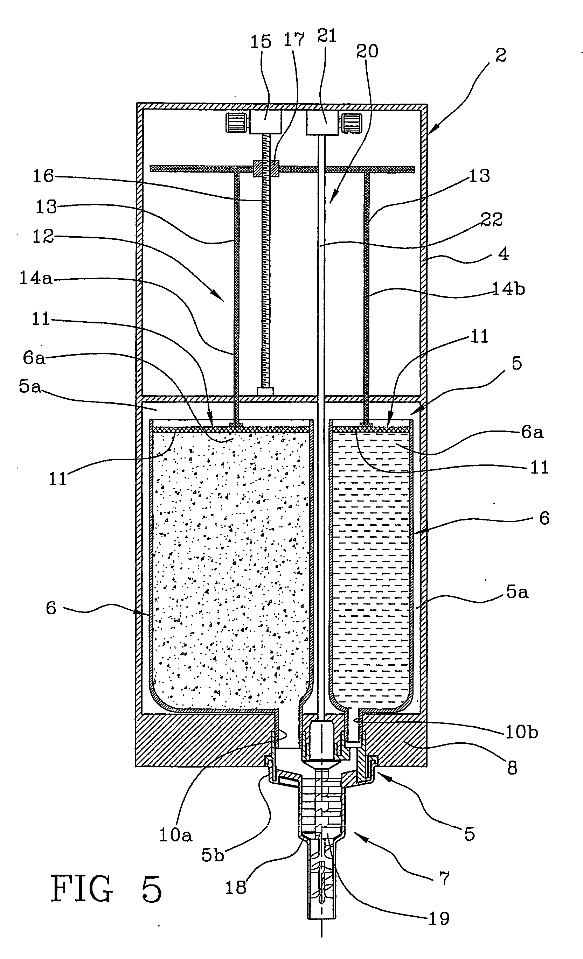

To this aim, the dispenser device 1 comprises an ejection member 12 acting on cartridges 6 (Fig. 5). In detail, the ejection member 12 comprises a pusher 13 put into contact with pistons 11 to force the pistons 11 themselves forward.

In the described embodiment, pusher 13 comprises two rods 14a, 14b each in contact with a respective piston 11.

The ejection member 12 further comprises a motor 15 to drive pusher 13 and therefore pistons 11 in motion. By way of example, coupling between motor 15 and pusher 13 is made through a worm screw 16 and a lead nut associated with rods the 14a, 14b.

Mixer 17 associable with the dispenser device 1 is of the disposable type. In fact, once dispensing of the substance has been carried out, a portion of the already mixed substance intended for cross-linking remains inside mixer 7. The subsequent substance dispensing can only take place by replacing mixer 7.

In the described embodiment, mixer 7 is of the combined dynamic-static type and comprises a dispensing nozzle 8 to be coupled with the dispenser device 1 at the second portion 5b of the receiving seat 5.

Coaxially disposed at the inside of nozzle 8 is a propeller 19 that, suitably set in rotation, promotes mixing of the components.

In detail, the dispenser device 1 comprises actuating means 20 for movement of propeller 19, which means comprises a motor 21, a possible reduction gear (not shown in the figures) and a shaft 22 to be fitted into propeller 19 to drive it in rotation.

Shaft 22 has a shaped cross section to form an integrally-rotating coupling between shaft 22 and propeller 19. By way of example, shaft 22 has a hexagonal cross section.

The dispenser device 1 further comprises drive means 23 associated with the ejection member 12 to operate dispensing of the substance. In particular, the drive means 23 acts on motor 15 of the ejection member'12 to actuate pusher 13. Said drive means 23 also acts on motor 21 of the actuating means 20 of mixer 7 to move propeller 19.

Preferably, operation of motor 15 of the ejection member 12 is simultaneous with operation of motor 21 of the actuating means 20 of mixer 7.

The drive means 23 comprises a button 24 advantageously' disposed on the upper surface 2a of the supporting structure 2. In more detail, the dispenser device is such designed as to be of the modular type, i.e. dispenser 1 can be associated with a desired number of further identical dispensers without particular interventions or modifications of the supporting structure 2a being required.

For the above purpose, the dispenser device 1 comprises coupling means 25 disposed on the supporting structure 2 to enable steady coupling of the dispenser device 1 with a further dispensing device.

The supporting structure 2 comprises a first 26 and a second 27 side wall facing each other. In detail, the coupling means 25 is disposed on the first 26 and second 27 side walls in such a manner that the first 26 or second 27 side wall of the dispenser device 1 will be associable with the corresponding second 27 or first 26 side wall of a further adjacent dispenser device.

To this aim, it will be recognised that the first 26 and second 27 side walls have respective outer surfaces 26a, 27a mutually conforming in shape, so that the dispenser device 1 can be easily associated with another dispenser device disposed in side by side relationship therewith.

It will be appreciated that advantageously the dispenser device 1 has no manual-access commands disposed on the first 26 and/or second side walls 27. Consequently, the dispenser device 1 can be associated with another dispenser device by placing the first 26 and second 27 side walls in side by side relationship. Therefore it is not possible to place commands at the side walls 26, 27 because an approached arrangement of the dispenser devices precludes lateral access to the devices themselves.

In this regard, all commands, transmissions for operation are inside, or on the upper part of, the device so that they do not interfere when several devices are to be coupled in a modular manner.

In a first embodiment, the coupling means 25 comprises at least one hook 28 disposed on the first 26 or second 27 side wall and a corresponding slot 29 disposed on the second 27 or first side wall 26 at a position in register with hook 28.

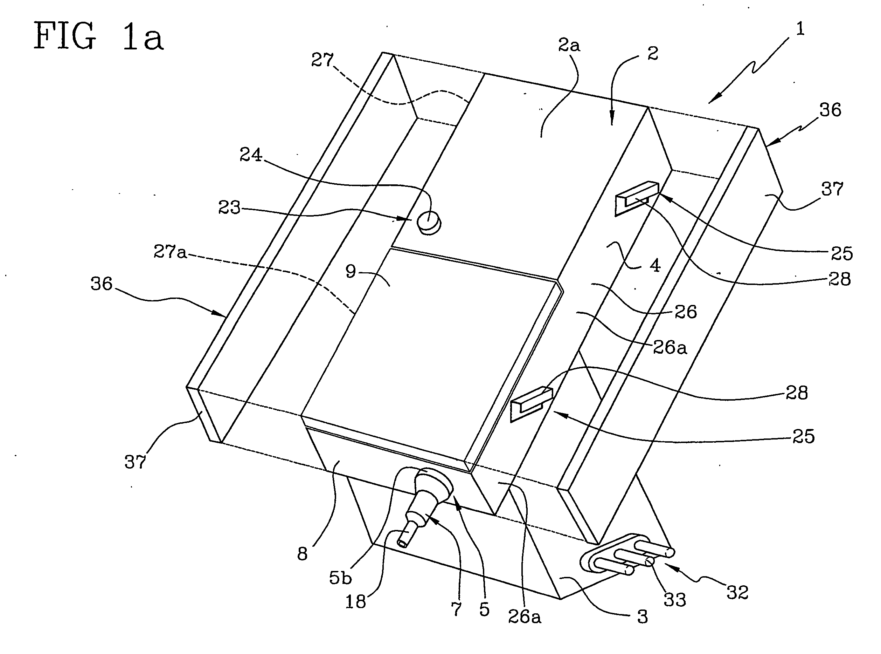

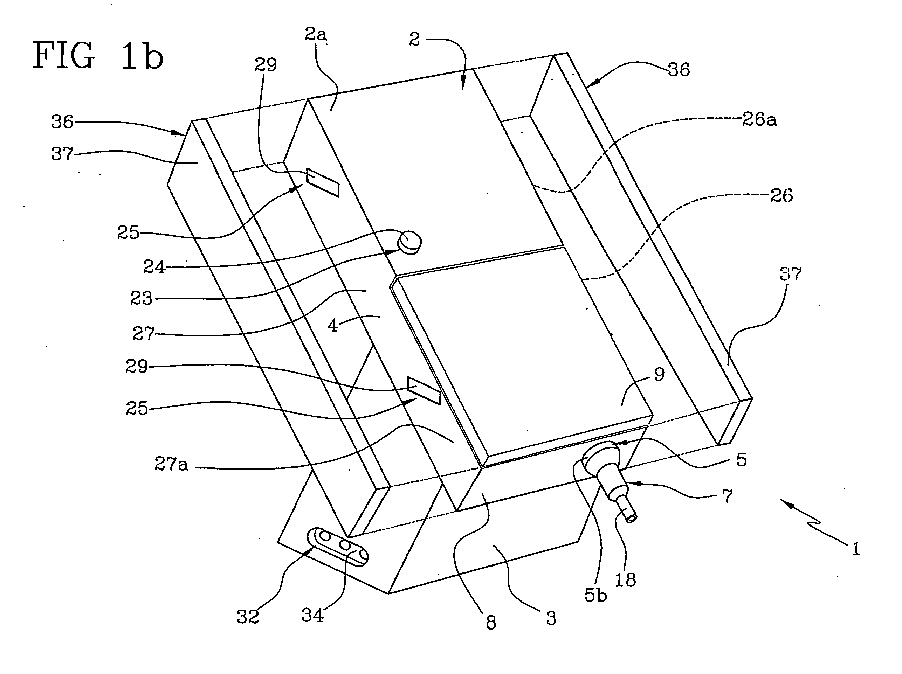

In the embodiment shown in Figs. 1a and 1b, the dispenser device 1 comprises two hooks 28 formed on the first side wall 26 and two corresponding slots 29 disposed on the second side wall 27.

Preferably, hooks 28 and slots 29 are formed integrally with the first 26 and second 27 side walls, in known manner. For instance, hooks 28 and slots 29 can be made by a bending and/or punching operation.

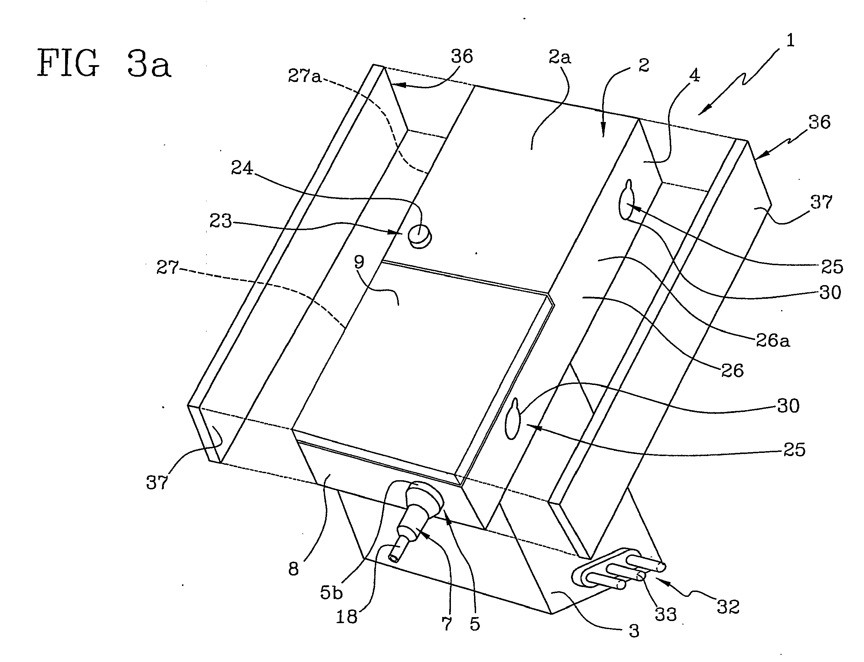

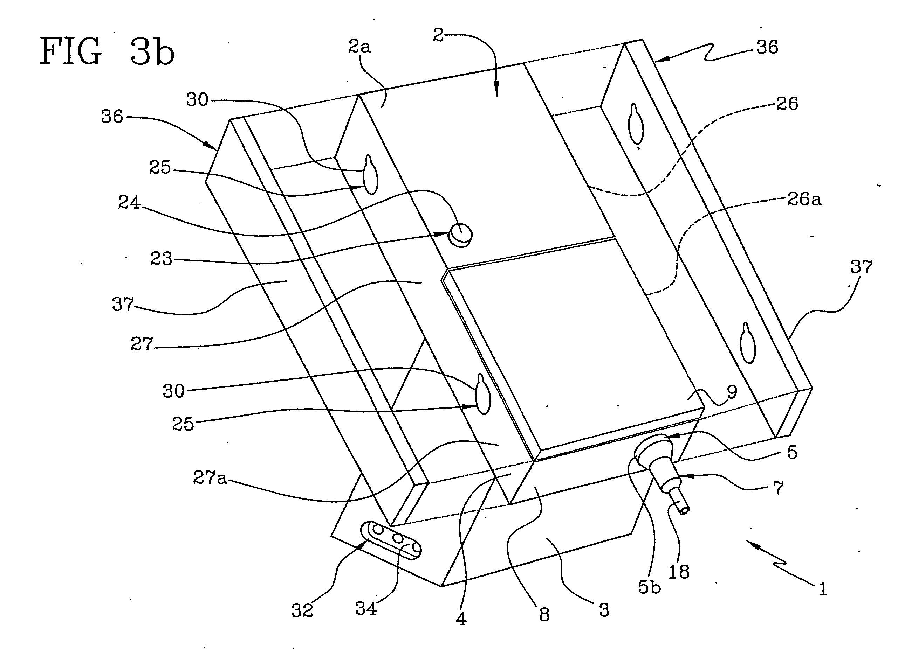

With reference to Fig. 3, in a coupled configuration each hook 28 houses in the respective slot 29.

In a second embodiment, the first 28 and second 29 side walls have respective openings in mutual alignment. In this case, the coupling means 25 comprises a hooking element 31 to be engaged in the respective openings 30 in the first 26 and second 27 side walls.

In detail, this hooking element 31 is insertable in the opening 30 formed in the first side wall 26 of the dispenser device 1 and in the opening 30 formed in the second side wall 27 of another dispenser device.

In the embodiment shown in Figs. 3a and 3b, the dispenser device 1 comprises two openings 30 formed in each first 26 and second 27 side wall in such a manner as to be aligned two by two.

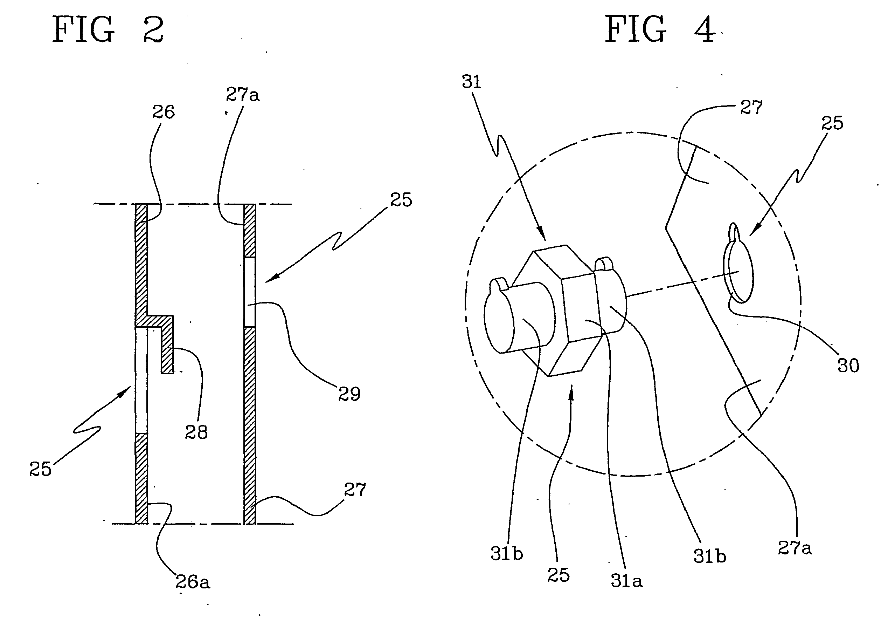

With particular reference to Fig. 4, the hooking element 31 comprises a central portion 31a adapted to be engaged by a tool to move the hooking element 28 during a step of associating the dispenser device 1 with another dispenser device 1, and two end portions 31b insertable into openings 30.

In particular, openings 30 in a first configuration enable entry of the end portions 31b into the supporting structure 2 and in a second configuration prevent exit of the end portions 31b, so that the dispenser device 1 can be maintained steadily associated with another dispenser device disposed in side by side relationship therewith. In other words, the shape of the end portions 31b matches the shape of openings 30 into which the former must be introduced.

It will be understood that the adopted embodiment for the hooking means is not essential and therefore it can be different from that shown, provided the set does not lose its modular character, i.e. provided engagement of any number of identical dispenser devices is allowed.

The dispenser device 1 can further comprise means 32 for electric connection to allow electrical connection of the dispenser device 1 with another dispenser device associated therewith.

In detail, the electric-connection means 32 comprises a male connector 33 disposed on the first side wall 26 for example, and a female connector 34 placed on the second side wall 27.

In this manner, as better clarified in the following, it will be possible to associate two or more dispenser devices 1 by disposing them in mutual side by side relationship and powering them with only one external power supply 35.

The dispenser device 1 further comprises a lateral finish body 36 that can be placed over the coupling means 25 to conceal it. In particular, this lateral finish body 36 is adapted to cover the coupling means 25 that is not used and that therefore would be in sight, when a dispenser device 1 is associated with another dispensing device.

In detail, the lateral finish body 36 comprises panels 37 adapted to be superposed on the first 26 and/or the second side wall 27; these panels possibly can be painted or at all events personalised to give the dispenser the desired aesthetic appearance. In other words, each module will be provided with the respective self-supporting structure 2, while the lateral finish bodies 36 or aesthetic shells will have to be alternatively applied to the sides of a single dispenser or the sides of several coupled dispensers forming the module.

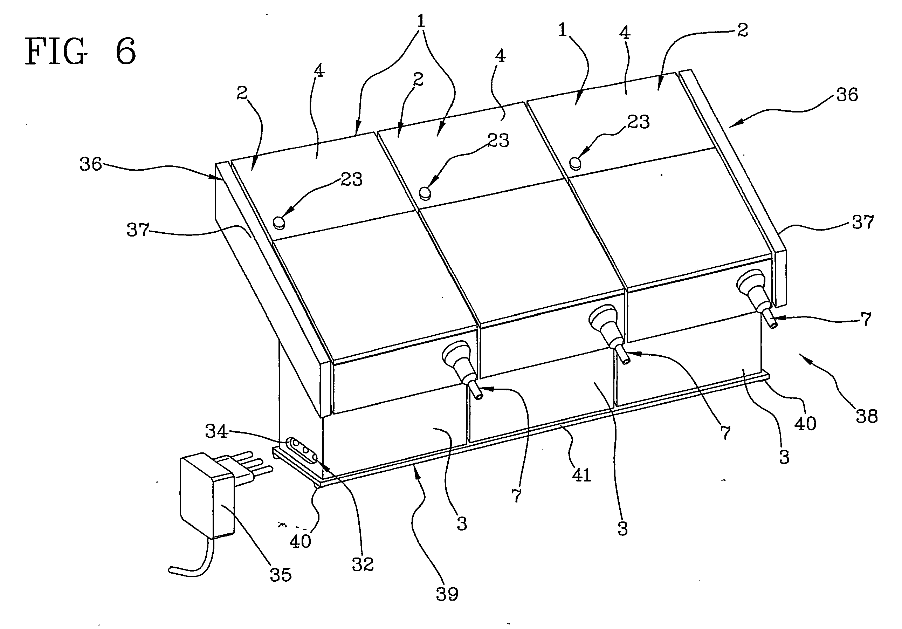

The invention can further form a set 38 comprising a predetermined number of the above described dispenser devices 1 (Fig. 6).

In particular, the dispenser devices 1 are disposed side by side in such a manner that the first side wall 26 of a dispenser 1 is coupled with the second side wall 27 of an adjacent dispenser 1 through the described coupling means 25.

Set 38 further comprises a support 39 to bear the plurality of dispenser devices 1 associated with each other. In particular, by way of example, support 39 can comprise a plurality of feet 40 mutually connected by a suitable frame 41 on which the plurality of dispenser devices 1 rests.

In an alternative embodiment, support 39 comprises a hook (not shown in the figures) to hang the set 38 of dispensers on a wall.

As mentioned above, set 38 further comprises said power supply 35 to electrically feed the dispenser devices 1.

It will be appreciated that for set 38 only one power supply 35 is required which is connected to one alone of said dispenser devices 1. In fact, all dispenser devices 1 are electrically connected by the above mentioned electric-connection means 32.

In addition, set 38 comprises said lateral finish body 36 covering the unused coupling means 25. In particular, the lateral finish body 36 comprises panels 37 adapted to be superposed on the second wall 27 of the first dispenser device 1 and the first side wall 26 of the last dispenser device 1.

The invention reaches the intended purposes and achieves important advantages.

First of all, it is possible to steadily associate a predetermined number of dispenser devices 1 in such a manner that each lies side by side with, and connected to the adjacent one.

This allows an important space to be saved and more comfort to be reached because the dispenser devices 1 constitute a single body easily movable depending on requirements.

It is also to be pointed out that the presence of the electric-connection means 32 enables use of a single power supply 35 capable of feeding all the dispenser devices 1 associated with each other with electric energy. This too allows simpler use and space economy.

In addition, the lateral finish body 36 allows the unused coupling means 25 to be covered thus achieving an improved aesthetic effect. It is also possible to provide a plurality of lateral finish bodies 36 differently decorated to adapt them to the harmony of the room where the dispenser device 1 or set 38 are to be used.

In case of damage of one of said finish bodies, the same can be replaced in a very simple manner and with very low costs.

In addition, the system is very versatile because if only one device is first purchased, other devices can be added also later on, depending on requirements.

## Claims

1. A dispenser device for bi-component substances comprising:
- a supporting structure (2);
- a receiving seat (5) formed inside said supporting structure (2) and in which at least two cartridges (6) can be housed, each of them containing one respective component of a substance to be mixed, as well as a mixer (7) in fluid communication with said cartridges (6), in order to mix said components;
- an ejection member (12) capable of acting on both the cartridges (6) to enable dispensing of said components; said dispenser device being **characterised in that** it is a modular type dispenser device further comprising coupling means (25) disposed on said supporting structure (2) to allow steady coupling of said dispenser device with another dispenser device,
**in that** said supporting structure (2) is provided with a first (26) and a second (27) side wall which are substantially opposite to each other; said coupling means (25) being associated with said first (26) and/or second (27) side walls of said supporting structure (2) to steadily couple said first (26) or second (27) side wall of said dispenser device with said second (27) or first (26) side wall of another dispenser device,
**in that** it further comprises electric-connection means (32) to electrically connect said dispenser device to another dispenser device, and **in that** said connection means (32) comprises a male connector (33) disposed on said first side wall (26) and a female connector (34) disposed on said second side wall (27) whereby it will be possible to associate two or more dispenser devices (1) by disposing them in mutual side by side relationship and powering them with only one external power supply (35).

2. A dispenser device as claimed in claim 1, **characterised in that** said first (26) and second (27) side walls have substantially matching respective outer surfaces (26a, 27a) and **characterised in that** said first (26) and second (27) side walls are without manual-access command members.

3. A dispenser device as claimed in anyone of claims 1 to 2, **characterised in that** it further comprises a lateral finish body (36) that can be superposed on said coupling means (25) and preferably on said first (26) and second (27) side walls to conceal the latter and preferably **characterised in that** said covering body (36) comprises at least one panel (37) adapted to be superposed on said first (26) and/or second (27) side wall.

4. A dispenser device as claimed in anyone of claims 1 to 3, **characterised in that** the coupling means (25) comprises at least one hook (28) associated with said first side wall (26) and a slot (29) made on said second side wall (27) at a position corresponding to said hook (28); said slot (29) being adapted to receive said hook (28) of another dispenser device.

5. A dispenser device as claimed in claim 4, **characterised in that** said hook (28) and slot (29) are made integrally with said first (26) and second (27) side walls by a bending and/or punching operation.

6. A dispenser device as claimed in claim 4 or 5, **characterised in that** it comprises a plurality of said hooks (28) and a corresponding plurality of said slots (29).

7. A dispenser device as claimed in anyone of claims 1 to 6, **characterised in that** said first (26) and second (27) side walls have respective openings (30) preferably aligned with each other; said coupling means (25) comprising at least one hooking element (31) intended for engagement in said opening (31) of said first side wall (26) and in said opening (30) of said second wall (27) of another dispenser device.

8. A dispenser device as claimed in claim 7, **characterised in that** said hooking element (31) comprises a central portion (31a) and two shaped end portions (31b) adapted to be inserted into said openings (30) to keep said dispenser device associated with another dispenser device.

9. A dispenser device as claimed in claim 8, **characterised in that** said openings (30) in a first operating configuration enable access of said shaped end portions (31b) to the inside of said supporting structure (2) and in a second operating configuration prevent exit of said end portions (31b).

10. A set comprising a predetermined number of at least two identical dispenser devices, each **characterised by**:
- a supporting structure (2);
- a receiving seat (5) formed inside said supporting structure (2) and in which at least two cartridges (6) can be housed, each of them containing one respective component of a substance to be mixed as well as a mixer (7) in fluid communication with said cartridges (6) in order to mix said components;
- an ejection member (12) capable of acting on both the cartridges (6) to enable dispensing of said components;
- each dispenser device in the set being a modular type dispenser device steadily coupled with another dispenser device of the set through coupling means (25) associated with each supporting structure (2).

11. A set as claimed in claim 10, **characterised in that** each supporting structure (2) comprises a first (26) and a second (27) side wall facing each other; each first wall (26) of a dispenser device being associated with each second wall (27) of a subsequent dispenser device.

12. A set as claimed in claim 10 or 11, **characterised in that** it comprises a single support (39) to bear said dispenser devices.

13. A set as claimed in claim 12, **characterised in that** said support (39) comprises a hook to fix said set to a wall.

14. A set as claimed in anyone of claims 10 to 13, **characterised in that** each dispenser device comprises electric-connection means (32) to connect each dispenser device to an adjacent dispenser device and only one external power supply (35) whereby it will be possible to associate two or more dispenser devices (1) by disposing them in mutual side by side relationship and powering them with the only one external supply (35).

15. A set as claimed in claim 14, **characterised in that** said connection means (32) of each dispenser device comprises a male connector (33) disposed on said first side wall (26) and a female connector (34) disposed on said second side wall (27), the male connector (33) of a dispenser device being suitable for being associated to a female connector of an adjacent dispenser device and the female connector (33) of a dispenser device being suitable for being associated to a male connector of an adjacent dispenser device, and said power supply (35) electrically feeding all the dispenser devices of the set.

16. A set as claimed in anyone of claims 10 to 15, **characterised in that** it further comprises a lateral finish body (36) associated with a first one and a last one of said dispenser devices and adapted to be superposed on said coupling means (25),and preferably **characterised in that** said lateral finish body (36) comprises panels (37) adapted to be superposed on said second side wall (27) of said first dispenser device and on said first side wall (26) of said last dispenser device.

## Patentansprüche

1. Ausgabevorrichtung für Zweikomponenten-Substanzen, umfassend:
- eine Haltestruktur (2);
- einen Aufnahmesitz (5), der innerhalb der Haltestruktur (2) ausgestaltet ist und in dem mindestens zwei Patronen (6) untergebracht werden können, von denen jede einen jeweiligen Bestandteil einer zu mischenden Substanz enthält, sowie einen Mischer (7) in Fluidverbindung mit den Patronen (6), um die Bestandteile zu mischen;
- ein Ausstoßteil (12), das dazu fähig ist, auf beide Patronen (6) einzuwirken, um die Ausgabe der Bestandteile zu ermöglichen, wobei die Ausgabevorrichtung **dadurch gekennzeichnet ist, dass** sie eine Ausgabevorrichtung vom modularen Typ ist, ferner umfassend Verkoppelungsmittel (25), die an der Haltestruktur (2) angeordnet sind, um ein stetiges Verkoppeln der Ausgabevorrichtung mit einer anderen Ausgabevorrichtung zu ermöglichen,
dass die Haltestruktur (2) mit einer ersten (26) und einer zweiten (27) Seitenwand, die im Wesentlichen entgegengesetzt zueinander liegen, ausgestattet ist, wobei die Verkoppelungsmittel (25) an die erste (26) und/oder zweite (27) Seitenwand der Haltestruktur (2) angeschlossen sind, um die erste (26) oder zweite (27) Seitenwand der Ausgabevorrichtung stetig mit der zweiten (27) oder ersten (26) Seitenwand einer anderen Ausgabevorrichtung zu verkoppeln,
dass sie ferner elektrische Verbindungsmittel (32) zum elektrischen Verbinden der Ausgabevorrichtung mit einer anderen Ausgabevorrichtung umfasst und dass die Verbindungsmittel (32) einen Stecker (33), der an der ersten Seitenwand (26) angeordnet ist, und eine Buchse (34), die an der zweiten Seitenwand (27) angeordnet ist, umfassen, wobei es möglich sein wird, zwei oder mehr Ausgabevorrichtungen (1) aneinander anzuschließen, indem sie in gegenseitig in einer Seite-an-Seite-Beziehung angeordnet und mit nur einer externen Stromversorgung (35) mit Strom versorgt werden.

2. Ausgabevorrichtung nach Anspruch 1, **dadurch gekennzeichnet, dass** die erste (26) und zweite (27) Seitenwand im Wesentlichen zusammenpassende Außenflächen (26a, 27a) aufweisen und **dadurch gekennzeichnet, dass** die erste (26) und zweite (27) Seitenwand keine Befehlsteile für einen manuellen Zugriff aufweisen.

3. Ausgabevorrichtung nach einem der Ansprüche 1 bis 2, **dadurch gekennzeichnet, dass** sie ferner ein seitliches Abschlussgehäuse (36) umfasst, das über die Verkoppelungsmittel (25) und vorzugsweise auf die erste (26) und zweite (27) Seitenwand gelagert werden kann, um Letztere zu bedecken und vorzugsweise **dadurch gekennzeichnet, dass** das Abdeckgehäuse (36) mindestens eine Platte (37) umfasst, die dazu geeignet ist, auf die erste (26) und/oder zweite (27) Seitenwand gelagert zu werden.

4. Ausgabevorrichtung nach einem der Ansprüche 1 bis 3, **dadurch gekennzeichnet, dass** die Verkoppelungsmittel (25) mindestens einen Haken (28) umfassen, der an die erste Seitenwand (26) angeschlossen ist und einen Schlitz (29), der in der zweiten Seitenwand (27) an einer Position ausgebildet ist, die dem Haken (28) entspricht, wobei der Schlitz (29) dazu geeignet ist, den Haken (28) einer anderen Ausgabevorrichtung aufzunehmen.

5. Ausgabevorrichtung nach Anspruch 4, **dadurch gekennzeichnet, dass** der Haken (28) und der Schlitz (29) einstückig mit der ersten (26) und zweiten (27) Seitenwand durch ein Biege- und/oder Stanzverfahren ausgebildet sind.

6. Ausgabevorrichtung nach den Ansprüchen 4 oder 5, **dadurch gekennzeichnet, dass** sie eine Vielzahl dieser Haken (28) und eine entsprechende Vielzahl dieser Schlitze (29) umfasst.

7. Ausgabevorrichtung nach einem der Ansprüche 1 bis 6, **dadurch gekennzeichnet, dass** die erste (26) und zweite (27) Seitenwand jeweilige Öffnungen (30) aufweisen, die vorzugsweise aneinander ausgerichtet sind, wobei die Verkoppelungsmittel (25) mindestens ein Hakenelement (31) umfassen, das für den Eingriff in die Öffnung (31) der ersten Seitenwand (26) und in die Öffnung (30) der zweiten Wand (27) einer anderen Ausgabevorrichtung vorgesehen ist.

8. Ausgabevorrichtung nach Anspruch 7, **dadurch gekennzeichnet, dass** das Hakenelement (31) einen mittleren Abschnitt (31a) und zwei geformte Endabschnitte (31b) aufweist, die dazu geeignet sind, in die Öffnungen (30) eingeführt zu werden, um die Ausgabevorrichtung an eine andere Ausgabevorrichtung angeschlossen zu halten.

9. Ausgabevorrichtung nach Anspruch 8, **dadurch gekennzeichnet, dass** die Öffnungen (30) in einer ersten Betriebskonfiguration einen Zugriff der geformten Endabschnitte (31b) auf das Innere der Haltestruktur (2) ermöglichen und in einer zweiten Betriebskonfiguration den Austritt der Endabschnitte (31b) verhindern.

10. Einheit, umfassend eine vorgegebene Anzahl von mindestens zwei identischen Ausgabevorrichtungen, von denen jede durch Folgendes **gekennzeichnet** ist:
- eine Haltestruktur (2);
- einen Aufnahmesitz (5), der innerhalb der Haltestruktur (2) ausgestaltet ist und in dem mindestens zwei Patronen (6) untergebracht werden können, wobei jede von ihnen einen jeweiligen Bestandteil einer zu mischenden Substanz sowie einen Mischer (7) in Fluidverbindung mit den Patronen (6) enthält, um die Bestandteile zu mischen;
- ein Ausstoßteil (12), das zum Einwirken auf beide Patronen (6) fähig ist, um die Ausgabe der Bestandteile zu ermöglichen;
- wobei jede Ausgabevorrichtung in der Einheit eine Ausgabevorrichtung vom modularen Typ ist, die stetig mit einer anderen Ausgabevorrichtung der Einheit durch Verkoppelungsmittel (25), die an jede Haltestruktur (2) angeschlossen sind, verkoppelt ist.

11. Einheit nach Anspruch 10, **dadurch gekennzeichnet, dass** jede Haltestruktur (2) eine erste (26) und eine zweite (27) Seitenwand, die sich gegenüberliegen, umfasst, wobei jede erste Wand (26) einer Ausgabevorrichtung an jede zweite Wand (27) einer darauffolgenden Ausgabevorrichtung angeschlossen ist.

12. Einheit nach Anspruch 10 oder 11, **dadurch gekennzeichnet, dass** sie eine einzelne Halterung (39) umfasst, um die Ausgabevorrichtungen zu tragen.

13. Einheit nach Anspruch 12, **dadurch gekennzeichnet, dass** die Halterung (39) einen Haken zum Befestigen der Einheit an einer Wand umfasst.

14. Einheit nach einem der Ansprüche 10 bis 13, **dadurch gekennzeichnet, dass** jede Ausgabevorrichtung elektrische Verbindungsmittel (32) zum Verbinden jeder Ausgabevorrichtung mit einer angrenzenden Ausgabevorrichtung und nur einer externen Stromversorgung (35) umfasst, wobei es möglich sein wird, zwei oder mehr Ausgabevorrichtungen (1) aneinander anzuschließen, indem sie gegenseitig in einer Seite-an-Seite-Beziehung angeordnet und mit der nur einen externen Versorgung (35) mit Strom versorgt werden.

15. Einheit nach Anspruch 14, **dadurch gekennzeichnet, dass** die Verbindungsmittel (32) einer jeden Ausgabevorrichtung einen Stecker (33) umfassen, der an der ersten Seitenwand (26) angeordnet ist und eine Buchse (34), die an der zweiten Seitenwand (27) angeordnet ist, wobei der Stecker (33) einer Ausgabevorrichtung dafür zweckmäßig ist, an eine Buchse einer angrenzenden Ausgabevorrichtung angeschlossen zu werden und die Buchse (33) einer Ausgabevorrichtung dafür zweckmäßig ist, an einen Stecker einer angrenzenden Ausgabevorrichtung angeschlossen zu werden und die Stromversorgung (35) alle Ausgabevorrichtungen der Einheit elektrisch speist.

16. Einheit nach einem der Ansprüche 10 bis 15, **dadurch gekennzeichnet, dass** sie ferner ein seitliches Abschlussgehäuse (36) umfasst, das an eine erste und eine letzte der Ausgabevorrichtungen angeschlossen ist und dazu geeignet ist, über die Verkoppelungsmittel (25) gelagert zu werden und vorzugsweise **dadurch gekennzeichnet ist, dass** das seitliche Abschlussgehäuse (36) Platten (37) umfasst, die dazu geeignet sind, auf die zweite Seitenwand (27) der ersten Ausgabevorrichtung und auf die erste Seitenwand (26) der letzten Ausgabevorrichtung gelagert zu werden.

## Revendications

1. Dispositif de distribution pour substances à deux composants comprenant :
- une structure de support (2) ;
- un logement de réception (5) formé à l'intérieur de ladite structure de support (2) et dans lequel au moins deux cartouches (6) peuvent être logées, chacune d'entres elles contenant respectivement un composant d'une substance à mélanger, ainsi qu'un mélangeur (7) assurant le passage de fluides avec lesdites cartouches (6), pour permettre le mélange desdits composants ;
- un organe d'éjection (12) capable d'agir sur les deux cartouches (6) pour permettre la distribution desdits composants ; ledit dispositif de distribution étant **caractérisé en ce qu'**il est un dispositif de distribution de type modulaire comprenant aussi des moyens d'accouplement (25) disposés sur ladite structure de support (2) pour permettre un accouplement constant dudit dispositif de distribution avec un autre dispositif de distribution,
**en ce que** ladite structure de support (2) est équipée d'une première (26) et d'une seconde (27) cloison latérale étant substantiellement opposées l'une à l'autre ; lesdits moyens d'accouplement (25) étant associés avec lesdites première (26) et/ou seconde (27) cloisons latérales de ladite structure de support (2) pour accoupler constamment ladite première (26) ou seconde (27) cloison latérale dudit dispositif de distribution avec ladite seconde (27) ou première (26) cloison latérale d'un autre dispositif de distribution,
**en ce qu'**il comprend aussi des moyens de connexion électrique (32) pour relier électriquement ledit dispositif de distribution à un autre dispositif de distribution, et **en ce que** lesdits moyens de connexion (32) comprennent un connecteur mâle (33) disposé sur ladite première cloison latérale (26) et un connecteur femelle (34) disposé sur ladite seconde cloison latérale (27) par lesquels il sera possible d'associer deux ou plusieurs dispositifs de distribution (1) en les positionnant l'un à côté de l'autre et en les alimentant avec une seule source d'alimentation externe (35).

2. Dispositif de distribution selon la revendication 1, **caractérisé en ce que** lesdites première (26) et seconde (27) cloisons latérales possèdent des surfaces externes (26a, 27a) qui se correspondent substantiellement et **caractérisé en ce que** lesdites première (26) et seconde (27) cloisons latérales sont privées d'organes de commandes à accès manuel.

3. Dispositif de distribution selon l'une quelconque des revendications 1 ou 2, **caractérisé en ce qu'**il comprend aussi un corps de finition latéral (36) qui peut être superposé sur lesdits moyens d'accouplement (25) et préférablement sur lesdites première (26) et seconde (27) cloisons latérales pour dissimuler ces dernières et préférablement **caractérisé en ce que** ledit corps de couverture (36) comprend au moins un panneau (37) adapté pour être superposé à ladite première (26) et/ou seconde (27) cloison latérale.

4. Dispositif de distribution selon l'une quelconque des revendications de 1 à 3, **caractérisé en ce que** les moyens d'accouplement (25) comprennent au moins un crochet (28) associé à ladite première cloison latérale (26) et une fente (29) réalisée sur ladite seconde cloison latérale (27) à une position correspondant au dit crochet (28) ; ladite fente (29) étant adaptée pour recevoir ledit crochet (28) d'un autre dispositif de distribution.

5. Dispositif de distribution selon la revendication 4, **caractérisé en ce que** lesdits crochet (28) et fente (29) sont fabriqués intégralement avec lesdites première (26) et seconde (27) cloisons latérales par une opération de pliage et/ou de perçage.

6. Dispositif de distribution selon les revendications 4 ou 5, **caractérisé en ce qu'**il comprend une pluralité desdits crochets (28) et une pluralité desdites fentes (29) correspondantes.

7. Dispositif de distribution selon l'une quelconque des revendications 1 à 6, **caractérisé en ce que** lesdites première (26) et seconde (27) cloisons latérales ont des ouvertures (30) respectives préférablement alignées l'une à l'autre ; lesdits moyens d'accouplement (25) comprenant au moins un élément d'accrochage (31) prévu pour s'engager dans ladite ouverture (31) de ladite première cloison latérale (26) et dans ladite ouverture (30) de ladite seconde cloison (27) d'un autre dispositif de distribution.

8. Dispositif de distribution selon la revendication 7, **caractérisé en ce que** ledit élément d'accrochage (31) comprend une partie centrale (31a) et deux extrémités profilées (31b) adaptées pour être insérées dans lesdites ouvertures (30) pour maintenir ledit dispositif de distribution associé à un autre dispositif de distribution.

9. Dispositif de distribution selon la revendication 8, **caractérisé en ce que** lesdites ouvertures (30) dans une première configuration de fonctionnement permettent l'accès desdites extrémités profilées (31b) à l'intérieur de ladite structure de support (2) et, dans une deuxième configuration de fonctionnement, empêchent la sortie desdites extrémités (31b).

10. Ensemble comprenant un nombre prédéterminé d'au moins deux dispositifs de distribution identiques, chacun **caractérisé par** :
- une structure de support (2) ;
- un logement de réception (5) formé à l'intérieur de ladite structure de support (2) et dans lequel au moins deux cartouches (6) peuvent être logées, chacune d'entres elles contenant respectivement un composant d'une substance à mélanger, ainsi qu'un mélangeur (7) assurant le passage de fluides avec lesdites cartouches (6), pour permettre le mélange desdits composants ;
- un organe d'éjection (12) capable d'agir sur les deux cartouches (6) pour permettre la distribution desdits composants ; - chaque dispositif de distribution de l'ensemble étant un dispositif de distribution de type modulaire constamment couplé avec un autre dispositif de distribution de l'ensemble par les moyens d'accouplement (25) associés à chaque structure de support (2).

11. Ensemble selon la revendication 10, **caractérisé en ce que** chaque structure de support (2) comprend une première (26) et une seconde (27) cloison latérale se faisant face ; chaque première cloison (26) d'un dispositif de distribution étant associée à chaque seconde cloison (27) d'un dispositif de distribution ultérieur.

12. Ensemble selon la revendication 10 ou 11, **caractérisé en ce qu'**il comprend un unique support (39) pour supporter lesdits dispositifs de distribution.

13. Ensemble selon la revendication 12, **caractérisé en ce que** ledit support (39) comprend un crochet pour fixer ledit ensemble à une cloison.

14. Ensemble selon l'une quelconque des revendications de 10 à 13, **caractérisé en ce que** chaque dispositif de distribution comprend des moyens de connexion électrique (32) pour relier chaque dispositif de distribution à un dispositif de distribution voisin et à une seule source d'alimentation externe (35) par lequel il sera possible d'associer deux ou davantage de dispositifs de distribution (1) en les positionnant l'un à côté de l'autre et en les alimentant avec la seule source d'alimentation externe (35).

15. Ensemble selon la revendication 14, **caractérisé en ce que** lesdits moyens de connexion (32) de chaque dispositif de distribution comprennent un connecteur mâle (33) disposé sur ladite première cloison latérale (26) et un connecteur femelle (34) disposé sur ladite seconde cloison latérale (27), le connecteur mâle (33) d'un dispositif de distribution étant apte à être associé à un connecteur femelle d'un dispositif de distribution voisin et le connecteur femelle (33) d'un dispositif de distribution étant apte à être associé à un connecteur mâle d'un dispositif de distribution voisin, et ladite alimentation (35) alimentant électriquement tous les dispositifs de distribution de l'ensemble.

16. Ensemble selon l'une quelconque des revendications de 10 à 15, **caractérisé en ce que** il comprend aussi un corps de finition latéral (36) associé au premier et au dernier desdits dispositifs de distribution et adapté pour être superposé sur lesdits moyens d'accouplement (25), et préférablement **caractérisé en ce que** le corps de finition latéral (36) comprend des panneaux (37) adaptés pour être superposés à ladite seconde cloison latérale (27) dudit premier dispositif de distribution et sur ladite première cloison latérale (26) dudit dernier dispositif de distribution.
